# EUROPÄISCHE PATENTSCHRIFT

(11) **EP 4 380 846 B1**
(45) Veröffentlichungstag und Bekanntmachung des Hinweises auf die Patenterteilung: **23.09.2026**
(21) Anmeldenummer: 22738677.8
(22) Anmeldetag: 05.07.2022
(51) Int. Cl.: B62D 61/10, B62D 63/02

(54) **MOBILES TRANSPORTSYSTEM**
MOBILE TRANSPORT SYSTEM
SYSTÈME DE TRANSPORT MOBILE

(30) Priorität: 03.08.2021 DE 102021003983
(43) Veröffentlichungstag der Anmeldung: 12.06.2024
(73) Patentinhaber: SEW-EURODRIVE GmbH & Co. KG, 76646 Bruchsal (DE)
(72) Erfinder: SCHMIDT, Josef, 76661 Philippsburg - Huttenheim (DE); TUSKAN, Andreas, 75045 Walzbachtal (DE)
(86) Internationale Anmeldenummer: PCT/EP2022/068624
(87) Internationale Veröffentlichungsnummer: WO 2023/011823

(56) Entgegenhaltungen:
- EP-A1- 3 281 848
- DE-A1- 102016 013 645
- US-A1- 2020 114 714
- US-A1- 2021 171 104

## Beschreibung

Die Erfindung betrifft ein mobiles Transportsystem zum Transport von Gegenständen, insbesondere in einer technischen Anlage, welches ein Antriebsmodul und eine Mehrzahl von drehbar gelagerten Lenkrollen umfasst.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Gattungsgemäße mobile Transportsysteme sind in der Lage, leichte Steigungen oder Gefälle sowie kleine Bodenschwellen oder ähnliche Hindernisse zu überwinden.

Aus dem Dokument DE 10 2020 002 676 B3 ist ein mobiles Transportsystem zum Transport von Gegenständen, insbesondere in einer technischen Anlage, bekannt. Das mobile Transportsystem umfasst eine Antriebseinheit und eine Mehrzahl von drehbar gelagerten Stützrädern.

Das Dokument DE 10 2012 025 152 A1 offenbart ein fahrerloses Transportsystem, welches an einem Tragteil angeordnete Lenkrollen und eine Antriebseinheit aufweist. Die Antriebseinheit weist ein von einem Elektromotor angetriebenes Rad auf und ist über einen Linearaktor relativ zu dem Tragteil bewegbar.

Aus dem Dokument DE 10 2013 019 726 A1 ist ein Fahrzeug bekannt, welches ein Gestell aufweist, an welchem mehrere Lenkeinheiten drehbar gelagert sind. Die Lenkeinheiten weisen jeweils ein Antriebsrad auf, dessen Radachse in einem Radachsträger drehbar gelagert ist, wobei der Radachsträger mittels einer Pendelachse drehbar gelagert ist.

Das Dokument DE 10 2014 015 317 A1 offenbart ein Fahrzeug mit einem Gestell, an dem ein Aufnahmeteil mittels einer Linearführung geführt ist. Das Fahrzeug umfasst ferner eine Antriebseinheit, die Antriebsräder aufweist, welche mittels eines Drehlagers an einer Schwinge drehbar gelagert ist.

Aus der DE 10 2016 013 645 A1 ist ein gattungsgemäßes Transportsystem bekannt. Das Transportsystem weist ein erstes Mobilteil und ein zweites Mobilteil sowie ein Transportgestell auf, wobei am Transportgestell Lagerrollen zum Verfahren des Transportgestells auf einer Verfahrfläche angeordnet sind.

Aus der DE 10 2006 046 406 B3 ist ein Fahrzeug bekannt, welches ein Fahrgestell und eine Antriebseinheit umfasst. Die Antriebseinheit weist zwei Antriebsräder auf. Das Fahrzeug umfasst ferner zwei Vorderradeinheiten und zwei Hinterradeinheiten.

Aus der US 2020/0114714 A1 ist ein Fahrzeug bekannt, das zwei Antriebsmodule umfasst, welche in Längsrichtung versetzt zueinander angeordnet sind. Ein Tragrahmen ist auf den Antriebsmodulen abgestützt.

Aus der US 2021/0171104 A1 ist ein Fahrwerk für ein Fahrzeug bekannt, welches einen Rahmen und mehrere Räder aufweist. Zwei der Räder sind dabei an einem Hebel angeordnet, welcher relativ zu dem Rahmen schwenkbar ist.

Aus der EP 3 281 848 A1 ist ebenfalls ein Fahrwerk für ein Fahrzeug bekannt, welches einen Rahmen und mehrere Räder aufweist.

Der Erfindung liegt die Aufgabe zugrunde, ein mobiles Transportsystem zum Transport von Gegenständen weiterzubilden.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein erfindungsgemäßes mobiles Transportsystem zum Transport von Gegenständen, insbesondere in einer technischen Anlage, umfasst ein erstes Antriebsmodul und ein zweites Antriebsmodul, welche in einer Längsrichtung versetzt zueinander angeordnet sind, und eine Lastaufnahmeeinheit, welche auf den Antriebsmodulen abgestützt ist. Dabei umfasst jedes der Antriebsmodule einen Modulrahmen, eine erste Lenkrolle, welche um eine erste Drehachse drehbar gelagert ist, eine zweite Lenkrolle, welche um eine zweite Drehachse drehbar gelagert ist, eine dritte Lenkrolle, welche um eine dritte Drehachse drehbar gelagert ist, eine vierte Lenkrolle, welche um eine vierte Drehachse drehbar gelagert ist, und eine Antriebseinheit.

Dabei weist die Antriebseinheit einen an dem Modulrahmen angeordneten Antriebsrahmen, ein um eine erste Antriebsachse drehbares erstes Antriebsrad und ein um eine zweite Antriebsachse drehbares zweites Antriebsrad auf. Die erste Lenkrolle ist an einem ersten Lasthebel angeordnet, welcher um eine in eine Querrichtung verlaufende Lastachse relativ zu dem Modulrahmen schwenkbar ist, die zweite Lenkrolle ist an einem zweiten Lasthebel angeordnet, welcher um die Lastachse relativ zu dem Modulrahmen schwenkbar ist, die dritte Lenkrolle ist an dem Modulrahmen angeordnet, und die vierte Lenkrolle ist an dem Modulrahmen angeordnet. Dabei ist die Lastaufnahmeeinheit an einer ersten Stützstelle auf dem ersten Lasthebel und an einer zweiten Stützstelle auf dem zweiten Lasthebel abgestützt. Die Querrichtung verläuft dabei rechtwinklig zu der Längsrichtung. Eine Vertikalrichtung verläuft rechtwinklig zu der Längsrichtung und rechtwinklig zu der Querrichtung.

Das mobile Transportsystem weist vorteilhaft einen modularen Aufbau auf. Je nach geforderter Anwendung sind verschiedenartige Lastaufnahmeeinheiten mit den Antriebsmodulen kombinierbar. Die Lastaufnahmeeinheit ist beispielsweise lang und flach ausgebildet, weist also eine verhältnismäßig große Ausdehnung in Längsrichtung und eine verhältnismäßig kleine Ausdehnung in Vertikalrichtung auf. Beispielsweise ist die Lastaufnahmeeinheit auch kurz und hoch ausgebildet, weist also eine verhältnismäßig kleine Ausdehnung in Längsrichtung und eine verhältnismäßig große Ausdehnung in Vertikalrichtung auf. Auch die Ausdehnung der Lastaufnahmeeinheit in Querrichtung ist variabel. Die erfindungsgemäße Ausgestaltung des mobilen Transportsystems gestattet, eine durch die Lastaufnahmeeinheit auf die Antriebsmodule übertragene Gewichtskraft annähernd beliebig auf die Antriebsräder und die Lenkrollen zu verteilen. Durch die erfindungsgemäße Ausgestaltung des mobilen Transportsystems sind ferner Bodenunebenheiten ausgleichbar.

Vorzugsweise ist der Antriebsrahmen um eine in eine Vertikalrichtung verlaufende Lenkachse relativ zu dem Modulrahmen schwenkbar. Vorzugsweise ist die erste Lenkrolle um eine in Vertikalrichtung verlaufende erste Schwenkachse relativ zu dem ersten Lasthebel schwenkbar. Vorzugsweise ist die zweite Lenkrolle um eine in Vertikalrichtung verlaufende zweite Schwenkachse relativ zu dem zweiten Lasthebel schwenkbar. Vorzugsweise ist die dritte Lenkrolle um eine in Vertikalrichtung verlaufende dritte Schwenkachse relativ zu dem Modulrahmen schwenkbar. Vorzugsweise ist die vierte Lenkrolle um eine in Vertikalrichtung verlaufende vierte Schwenkachse relativ zu dem Modulrahmen schwenkbar. Derartig ausgebildete Lenkrollen sind verhältnismäßig kostengünstig und erleichtern zudem Kurvenfahrten des mobilen Transportsystems. Durch eine Schwenkbewegung des Antriebsrahmens relativ zu dem Modulrahmen ändert sich auch eine Ausrichtung der Antriebsräder relativ zu dem Modulrahmen. Dadurch ist eine Änderung der Bewegungsrichtung des mobilen Transportsystems durchführbar.

Gemäß einer vorteilhaften Ausgestaltung der Erfindung ist die Lastachse in Längsrichtung zwischen der ersten Schwenkachse und der dritten Schwenkachse angeordnet. Gemäß einer vorteilhaften Ausgestaltung der Erfindung ist die Lastachse in Längsrichtung zwischen der zweiten Schwenkachse und der vierten Schwenkachse angeordnet.

Gemäß einer bevorzugten Ausgestaltung der Erfindung ist die erste Stützstelle in Längsrichtung zwischen der ersten Schwenkachse und der Lastachse angeordnet. Gemäß einer bevorzugten Ausgestaltung der Erfindung ist die zweite Stützstelle in Längsrichtung zwischen der zweiten Schwenkachse und der Lastachse angeordnet.

Gemäß einer vorteilhaften Ausgestaltung der Erfindung ist ein erster Abstand der Lastachse zu der ersten Stützstelle in Längsrichtung zumindest annähernd gleich einem dritten Abstand der Lastachse zu der dritten Schwenkachse in Längsrichtung. Gemäß einer vorteilhaften Ausgestaltung der Erfindung ist ein zweiter Abstand der Lastachse zu der zweiten Stützstelle in Längsrichtung zumindest annähernd gleich einem vierten Abstand der Lastachse zu der vierten Schwenkachse in Längsrichtung. Diese Anordnung bewirkt eine gleichmäßige Lastverteilung auf die dritte Lenkrolle und das erste Antriebsrad sowie eine gleichmäßige Lastverteilung auf die vierte Lenkrolle und das zweite Antriebsrad.

Gemäß einer vorteilhaften Ausgestaltung der Erfindung ist ein fünfter Abstand der ersten Stützstelle zu der ersten Schwenkachse in Längsrichtung zumindest annähernd doppelt so groß ist wie ein erster Abstand der ersten Stützstelle zu der Lastachse in Längsrichtung. Gemäß einer vorteilhaften Ausgestaltung der Erfindung ist ein sechster Abstand der zweiten Stützstelle zu der zweiten Schwenkachse in Längsrichtung zumindest annähernd doppelt so groß ist wie ein zweiter Abstand der zweiten Stützstelle zu der Lastachse in Längsrichtung. Diese Anordnung bewirkt eine gleichmäßige Lastverteilung auf die erste Lenkrolle und das erste Antriebsrad sowie eine gleichmäßige Lastverteilung auf die zweite Lenkrolle und das zweite Antriebsrad.

Gemäß einer bevorzugten Ausgestaltung der Erfindung ist die Lenkachse in Längsrichtung zwischen der ersten Schwenkachse und der Lastachse angeordnet Gemäß einer bevorzugten Ausgestaltung der Erfindung ist die Lenkachse in Längsrichtung zwischen der zweiten Schwenkachse und der Lastachse angeordnet.

Gemäß einer vorteilhaften Ausgestaltung der Erfindung ist ein siebter Abstand der Lastachse zu der Lenkachse in Längsrichtung zumindest annähernd gleich einem ersten Abstand der Lastachse zu der ersten Stützstelle in Längsrichtung. Gemäß einer vorteilhaften Ausgestaltung der Erfindung ist ein siebter Abstand der Lastachse zu der Lenkachse in Längsrichtung zumindest annähernd gleich einem zweiten Abstand der Lastachse zu der zweiten Stützstelle in Längsrichtung. Diese Anordnung bewirkt eine gleichmäßige Lastverteilung auf die erste Lenkrolle und die dritte Lenkrolle sowie eine gleichmäßige Lastverteilung auf die zweite Lenkrolle und die vierte Lenkrolle.

Gemäß einer vorteilhaften Ausgestaltung der Erfindung ist ein siebter Abstand der Lastachse zu der Lenkachse in Längsrichtung zumindest annähernd gleich einem dritten Abstand der Lastachse zu der dritten Schwenkachse in Längsrichtung. Gemäß einer vorteilhaften Ausgestaltung der Erfindung ist ein siebter Abstand der Lastachse zu der Lenkachse in Längsrichtung zumindest annähernd gleich einem vierten Abstand der Lastachse zu der vierten Schwenkachse in Längsrichtung. Diese Anordnung bewirkt eine gleichmäßige Lastverteilung auf die erste Lenkrolle und die dritte Lenkrolle sowie eine gleichmäßige Lastverteilung auf die zweite Lenkrolle und die vierte Lenkrolle.

Gemäß einer bevorzugten Ausgestaltung der Erfindung ist die Lenkachse in Querrichtung zwischen der ersten Schwenkachse und der zweiten Schwenkachse angeordnet. Gemäß einer bevorzugten Ausgestaltung der Erfindung ist die Lenkachse in Querrichtung zwischen der dritten Schwenkachse und der vierten Schwenkachse angeordnet. Gemäß einer bevorzugten Ausgestaltung der Erfindung ist die Lenkachse in Querrichtung zwischen der ersten Stützstelle und der zweiten Stützstelle angeordnet.

Gemäß einer vorteilhaften Ausgestaltung der Erfindung verlaufen die Drehachsen der Lenkrollen sowie die Antriebsachsen der Antriebsräder jeweils in eine horizontale Richtung. Horizontale Richtungen erstrecken sich rechtwinklig zu der Vertikalrichtung.

Gemäß einer vorteilhaften Weiterbildung der Erfindung ist an mindestens einer der Lenkrollen eine Bremseinrichtung angeordnet, mittels welcher eine Drehung der jeweiligen Lenkrolle um die jeweilige Drehachse bremsbar ist. Die Bremseinrichtungen sind beispielsweise elektromagnetisch betätig bar. Damit ist eine Bremsung des mobilen Transportsystems annähernd unabhängig von der Beschaffenheit des Bodens jederzeit möglich. Zusätzliche Bremseinrichtungen an den Antriebsrädern sind nicht erforderlich.

Gemäß einer vorteilhaften Weiterbildung der Erfindung ist das erste Antriebsrad an einer um eine erste Schwingachse relativ zu dem Antriebsrahmen schwenkbaren ersten Schwinge drehbar gelagert, und das zweite Antriebsrad ist an einer um eine zweite Schwingachse relativ zu dem Antriebsrahmen schwenkbaren zweiten Schwinge drehbar gelagert. Dabei sind die erste Schwinge und die zweite Schwinge über eine Koppeleinheit derart miteinander gekoppelt, dass eine Schwenkbewegung der ersten Schwinge um die erste Schwingachse in eine erste Schwenkrichtung eine Schwenkbewegung der zweiten Schwinge um die zweite Schwingachse in eine der ersten Schwenkrichtung entgegen gerichtete zweite Schwenkrichtung bewirkt.

Durch die Schwenkbewegung der Schwingen um die Schwingachsen beim Überfahren von Bodenunebenheiten ist sichergestellt, dass beide Antriebsräder stets Kontakt zu dem Boden und einen ausreichend hohen Anpressdruck haben. Ein Einsatz von Federn, um einen ausreichend hohen Anpressdruck der Antriebsräder auf den Boden zu erreichen, ist nicht erforderlich. Das mobile Transportsystem weist dabei eine starre Kinematik auf, welche ein Nachgeben oder Ein federn beim Überfahren von Bodenunebenheiten vorteilhaft verhindert. Insbesondere sind die erste Antriebsachse und die zweite Antriebsachse relativ zueinander verschiebbar. Die erste Antriebsachse und die zweite Antriebsachse verlaufen stets parallel zueinander. Eine solche Verschiebung der Antriebsachsen relativ zueinander geschieht bei einer Schwenkbewegung der Schwingen um die Schwingachsen. Dadurch wird ein Verkanten der Antriebsräder bei einer Schwenkbewegung der Schwingen um die Schwingachsen vorteilhaft vermieden. Bei einer bestimmten Ausrichtung der Schwingen fluchten die Antriebsachsen miteinander. Insbesondere fluchten die erste Schwingachse und die zweite Schwingachse miteinander. Die Schwingachsen verlaufen somit parallel zueinander und parallel zu den Antriebsachsen. Eine Schwenkbewegung der Schwingen um die Schwingachsen bewirkt somit eine Verschiebung von einer der Antriebsachsen auf den Boden zu und eine Bewegung der anderen Antriebsachse von dem Boden weg.

Gemäß einer bevorzugten Weiterbildung der Erfindung weist die Antriebseinheit einen ersten Antriebsmotor zum Antrieb des ersten Antriebsrads und einen zweiten Antriebsmotor zum Antrieb des zweiten Antriebsrads auf. Insbesondere ist der erste Antriebsmotor an der ersten Schwinge angeordnet, und der zweite Antriebsmotor ist an der zweiten Schwinge angeordnet. Vorzugsweise sind ferner Getriebe vorgesehen, über welche die Antriebsmotoren die Antriebsräder antreiben. Die Getriebe sind dabei ebenfalls an den Schwingen angeordnet. Die Antriebsmotoren sowie die Getriebe sind dadurch platzsparend in einem Bauraum zwischen den Antriebsrädern angeordnet. Vorteilhaft weist das mobile Transportsystem ferner einen elektrischen Energiespeicher zur Versorgung der Antriebsmotoren auf.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine perspektivische Ansicht eines mobilen Transportsystems,
- Figur 2:: eine Seitenansicht eines mobilen Transportsystems und
- Figur 3:: eine Ansicht eines Teils einer Unterseite eines mobilen Transportsystems.

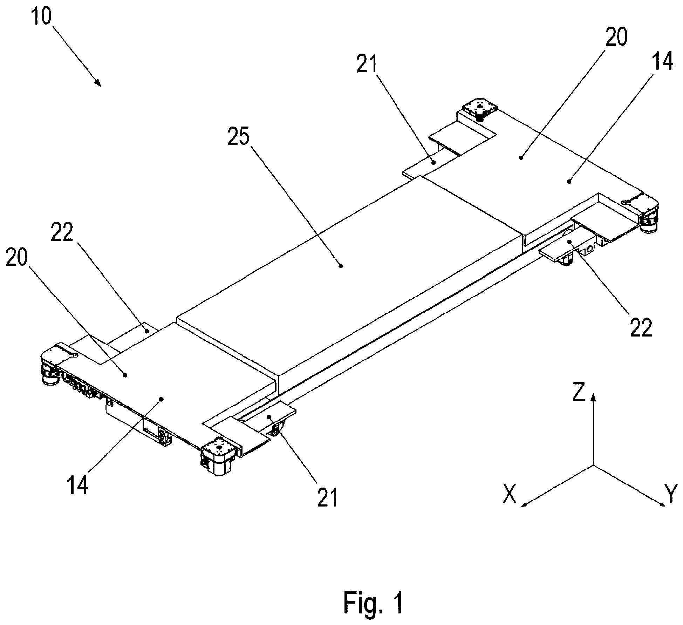

Figur 1 zeigt eine perspektivische Ansicht eines mobilen Transportsystems 10. Das mobile Transportsystem 10 dient vorliegend zum Transport von Gegenständen in einer technischen Anlage. Bei der technischen Anlage handelt es sich um eine industrielle Anwendung, beispielsweise ein Produktionswerk. Bei dem mobilen Transportsystem 10 handelt es sich vorliegend um ein autonom fahrendes Fahrzeug. In der hier gezeigten Darstellung befindet sich das mobile Transportsystem 10 auf einem ebenen Boden innerhalb einer technischen Anlage.

Das mobile Transportsystem 10 umfasst ein erstes Antriebsmodul 20 und ein zweites Antriebsmodul 20. Die Antriebsmodule 20 sind in einer Längsrichtung X versetzt zueinander angeordnet. Das mobile Transportsystem 10 umfasst auch eine Lastaufnahmeeinheit 25, welche auf den Antriebsmodulen 20 abgestützt ist. Die Lastaufnahmeeinheit 25 dient zur Aufnahme von zu transportierenden Gegenständen.

Die Längsrichtung X entspricht zumindest annähernd der gewöhnlichen Fahrtrichtung des mobilen Transportsystems 10. Eine Querrichtung Y verläuft rechtwinklig zu der Längsrichtung X. Die Längsrichtung X und die Querrichtung Y stellen horizontale Richtungen dar und verlaufen parallel zu dem ebenen Boden, auf welchem sich das mobile Transportsystem 10 befindet. Eine Vertikalrichtung Z steht senkrecht auf dem ebenen Boden und verläuft somit rechtwinklig zu der Längsrichtung X und rechtwinklig zu der Querrichtung Y. Jede Richtung rechtwinklig zu der Vertikalrichtung Z stellt eine horizontale Richtung dar.

Jedes der Antriebsmodule 20 umfasst einen Modulrahmen 14. Jedes der Antriebsmodule 20 umfasst ferner einen ersten Lasthebel 21 und einen Lasthebel 22. Die Lastaufnahmeeinheit 25 ist auf den Lasthebeln 21, 22 der Antriebsmodule 20 abgestützt.

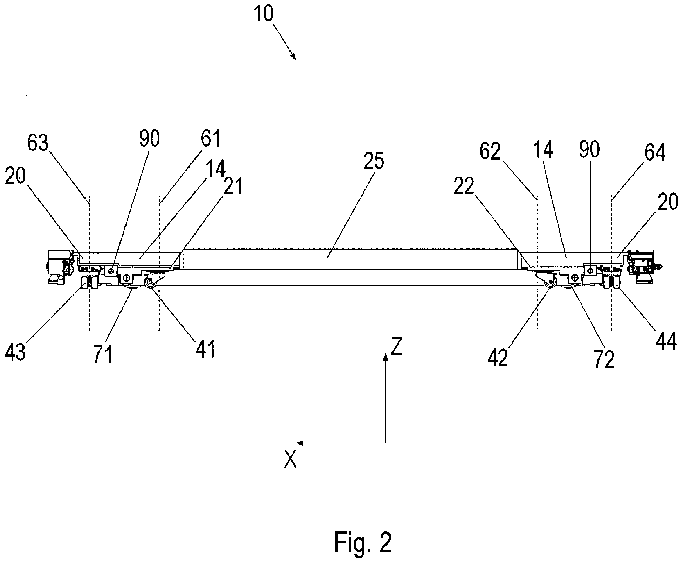

Figur 2 zeigt eine Seitenansicht eines mobilen Transportsystems 10. Jedes der Antriebsmodule 20 umfasst eine erste Lenkrolle 41, welche um eine erste Drehachse drehbar gelagert ist, eine zweite Lenkrolle 42, welche um eine zweite Drehachse drehbar gelagert ist, eine dritte Lenkrolle 43, welche um eine dritte Drehachse drehbar gelagert ist und eine vierte Lenkrolle 44, welche um eine vierte Drehachse drehbar gelagert ist. In der hier gezeigten Darstellung ist jeweils eine der Lenkrollen 41, 42, 43, 44 von einer anderen Lenkrolle 41, 42, 43, 44 verdeckt.

Die erste Lenkrolle 41 ist jeweils an dem ersten Lasthebel 21 angeordnet. Die zweite Lenkrolle 42 ist jeweils an dem zweiten Lasthebel 22 angeordnet. Die Lasthebel 21, 22 sind um eine in Querrichtung Y verlaufende Lastachse 90 relativ zu dem jeweiligen Modulrahmen 14 schwenkbar. Die dritte Lenkrolle 43 ist jeweils an dem Modulrahmen 14 angeordnet, und die vierte Lenkrolle 44 ist jeweils an dem Modulrahmen 14 angeordnet.

Die erste Lenkrolle 41 ist jeweils um eine in Vertikalrichtung Z verlaufende erste Schwenkachse 61 relativ zu dem ersten Lasthebel 21 schwenkbar. Die zweite Lenkrolle 42 ist jeweils um eine in Vertikalrichtung Z verlaufende zweite Schwenkachse 62 relativ zu dem zweiten Lasthebel 22 schwenkbar. Die dritte Lenkrolle 43 ist jeweils um eine in Vertikalrichtung Z verlaufende dritte Schwenkachse 63 relativ zu dem Modulrahmen 14 schwenkbar. Die vierte Lenkrolle 44 ist jeweils um eine in Vertikalrichtung Z verlaufende vierte Schwenkachse 64 relativ zu dem Modulrahmen 14 schwenkbar.

Die Drehachsen der Lenkrollen 41, 42, 43, 44 verlaufen jeweils in eine horizontale Richtung. In Abhängigkeit von einer Schwenkung der Lenkrollen 41, 42, 43, 44 um die jeweilige Schwenkachse 61, 62, 63, 64 verlaufen die besagten Drehachsen beispielsweise in Längsrichtung X oder in Querrichtung Y oder in eine andere horizontale Richtung. Die Schwenkachse 61, 62, 63, 64 und die Drehachse einer einzelnen Lenkrolle 41, 42, 43, 44 schneiden sich vorliegend nicht.

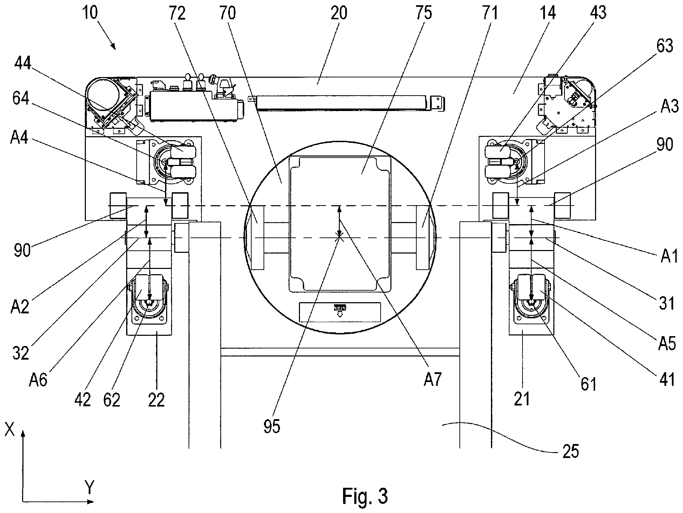

Figur 3 zeigt eine Ansicht eines Teils einer Unterseite eines mobilen Transportsystems 10. Dabei ist nur eines der beiden Antriebsmodule 20 und ein Teil der Lastaufnahmeeinheit 25 dargestellt. Das Antriebsmodul 20 umfasst eine Antriebseinheit 70. Die Antriebseinheit 70 weist einen Übertragerkopf 75 auf, der an dem Modulrahmen 14 angeordnet ist. Der Übertragerkopf 75 dient zur induktiven Aufnahme von Energie.

Die Antriebseinheit 70 weist ferner einen hier nicht dargestellten Antriebsrahmen auf, der an dem Modulrahmen 14 angeordnet ist. Der Antriebsrahmen ist um eine in Vertikalrichtung Z verlaufende Lenkachse 95 relativ zu dem Modulrahmen 14 schwenkbar. Die Antriebseinheit 70 weist ein um eine erste Antriebsachse drehbares erstes Antriebsrad 71 und ein um eine zweite Antriebsachse drehbares zweites Antriebsrad 72 auf. Die Antriebsachsen der Antriebsräder 71, 72 verlaufen jeweils in eine horizontale Richtung. In Abhängigkeit von einer Schwenkung des Antriebsrahmens um die Lenkachse 95 verlaufen die besagten Antriebsachsen beispielsweise in Längsrichtung X oder in Querrichtung Y oder in eine andere horizontale Richtung.

Die Lastaufnahmeeinheit 25 ist an einer ersten Stützstelle 31 auf dem ersten Lasthebel 21 abgestützt. Die Lastaufnahmeeinheit 25 ist an einer zweiten Stützstelle 32 auf dem zweiten Lasthebel 22 abgestützt. Die Lasthebel 21, 22 sind jeweils in einem Lager an dem Modulrahmen 14 gelagert. Die Lastachse 90, um welche die Lasthebel 21, 22 schwenkbar sind, verläuft in Querrichtung Y durch die besagten Lager.

Die Lenkachse 95 ist in Querrichtung Y zwischen der ersten Schwenkachse 61 der ersten Lenkrolle 41 und der zweiten Schwenkachse 62 der zweiten Lenkrolle 42 angeordnet. Die Lenkachse 95 ist in Querrichtung Y zwischen der dritten Schwenkachse 63 der dritten Lenkrolle 43 und der vierten Schwenkachse 64 der vierten Lenkrolle 44 angeordnet. Die Lenkachse 95 ist ferner in Querrichtung Y zwischen der ersten Stützstelle 31 und der zweiten Stützstelle 32 angeordnet.

Die Lastachse 90 ist in Längsrichtung X zwischen der ersten Schwenkachse 61 und der dritten Schwenkachse 63 angeordnet. Die Lastachse 90 ist in Längsrichtung X zwischen der zweiten Schwenkachse 62 und der vierten Schwenkachse 64 angeordnet. Die Lastachse 90 ist in Längsrichtung X zwischen der ersten Stützstelle 31 und der dritten Schwenkachse 63 angeordnet. Die Lastachse 90 ist in Längsrichtung X zwischen der zweiten Stützstelle 32 und der vierten Schwenkachse 64 angeordnet.

Die erste Stützstelle 31 ist in Längsrichtung X zwischen der ersten Schwenkachse 61 und der dritten Schwenkachse 63 angeordnet. Die zweite Stützstelle 32 ist in Längsrichtung X zwischen der zweiten Schwenkachse 62 und der vierten Schwenkachse 64 angeordnet. Die erste Stützstelle 31 ist in Längsrichtung X zwischen der ersten Schwenkachse 61 und der Lastachse 90 angeordnet. Die zweite Stützstelle 32 ist in Längsrichtung X zwischen der zweiten Schwenkachse 62 und der Lastachse 90 angeordnet.

Die Lenkachse 95 ist in Längsrichtung X zwischen der ersten Schwenkachse 61 und der dritten Schwenkachse 63 angeordnet. Die Lenkachse 95 ist in Längsrichtung X zwischen der zweiten Schwenkachse 62 und der vierten Schwenkachse 64 angeordnet. Die Lenkachse 95 ist in Längsrichtung X zwischen der ersten Schwenkachse 61 und der Lastachse 90 angeordnet. Die Lenkachse 95 ist in Längsrichtung X zwischen der zweiten Schwenkachse 62 und der Lastachse 90 angeordnet.

Ein erster Abstand A1 der Lastachse 90 zu der ersten Stützstelle 31 in Längsrichtung X ist zumindest annähernd gleich einem dritten Abstand A3 der Lastachse 90 zu der dritten Schwenkachse 63 in Längsrichtung X. Ein zweiter Abstand A2 der Lastachse 90 zu der zweiten Stützstelle 32 in Längsrichtung X ist zumindest annähernd gleich einem vierten Abstand A4 der Lastachse 90 zu der vierten Schwenkachse 64 in Längsrichtung X.

Ein fünfter Abstand A5 der ersten Stützstelle 31 zu der ersten Schwenkachse 61 in Längsrichtung X ist zumindest annähernd doppelt so groß ist wie der erste Abstand A1 der ersten Stützstelle 31 zu der Lastachse 90 in Längsrichtung X. Ein sechster Abstand A6 der zweiten Stützstelle 32 zu der zweiten Schwenkachse 62 in Längsrichtung X ist zumindest annähernd doppelt so groß ist wie der zweite Abstand A2 der zweiten Stützstelle 32 zu der Lastachse 90 in Längsrichtung X.

Ein siebter Abstand A7 der Lastachse 90 zu der Lenkachse 95 in Längsrichtung X ist zumindest annähernd gleich dem ersten Abstand A1 der Lastachse 90 zu der ersten Stützstelle 31 in Längsrichtung X. Der siebte Abstand A7 der Lastachse 90 zu der Lenkachse 95 in Längsrichtung X ist zumindest annähernd gleich dem zweiten Abstand A2 der Lastachse 90 zu der zweiten Stützstelle 32 in Längsrichtung X.

Der siebte Abstand A7 der Lastachse 90 zu der Lenkachse 95 in Längsrichtung X ist zumindest annähernd gleich dem dritten Abstand A3 der Lastachse 90 zu der dritten Schwenkachse 63 in Längsrichtung X. Der siebte Abstand A7 der Lastachse 90 zu der Lenkachse 95 in Längsrichtung X ist zumindest annähernd gleich dem vierten Abstand A4 der Lastachse 90 zu der vierten Schwenkachse 64 in Längsrichtung X.

Die Antriebseinheit 70 umfasst eine erste Schwinge, die um eine erste Schwingachse relativ zu dem Antriebsrahmen schwenkbar ist, und eine zweite Schwinge, die um eine zweite Schwingachse relativ zu dem Antriebsrahmen schwenkbar ist. Die erste Schwingachse und die zweite Schwingachse verlaufen in eine horizontale Richtung und fluchten miteinander. Die beiden Schwingen sind jeweils in eine erste Schwenkrichtung sowie in eine der ersten Schwenkrichtung entgegen gerichteten zweite Schwenkrichtung um die besagten Schwingachsen relativ zu dem Antriebsrahmen schwenkbar.

Das erste Antriebsrad 71 ist an der ersten Schwinge um die erste Antriebsachse drehbar gelagert. Das zweite Antriebsrad 72 ist an der zweiten Schwinge um die zweite Antriebsachse drehbar gelagert. Die Antriebsachsen verlaufen parallel zu den Schwingachsen, sind jedoch parallel zu diesen versetzt. Durch Schwenkbewegungen der Schwingen um die Schwingachsen sind die Antriebsachsen relativ zueinander verschiebbar.

Die Antriebseinheit 70 umfasst eine Koppeleinheit, die eine um eine Koppelachse relativ zu dem Antriebsrahmen schwenkbare Wippe, eine erste Strebe und eine zweite Strebe aufweist. Die erste Schwinge ist mittels der ersten Strebe mit der Wippe verbunden. Die zweite Schwinge ist mittels der zweiten Strebe mit der Wippe verbunden. Die Koppelachse verläuft in eine horizontale Richtung. Die erste Schwinge und die zweite Schwinge sind über die besagte Koppeleinheit miteinander gekoppelt.

Wenn beispielsweise das erste Antriebsrad 71 auf eine Bodenerhöhung fährt, so wird das erste Antriebsrad 71 dadurch in Vertikalrichtung Z nach oben bewegt. Die erste Schwinge wird dadurch um die erste Schwingachse in die erste Schwenkrichtung geschwenkt. Die erste Schwinge bewirkt dadurch über die erste Strebe eine Schwenkbewegung der Wippe um die Koppelachse. Die Wippe bewirkt dadurch über die zweite Strebe eine Schwenkbewegung der zweiten Schwinge um die zweite Schwingachse in die zweite Schwenkrichtung. Dadurch wird das zweite Antriebsrad in Vertikalrichtung Z nach unten bewegt.

### Bezugszeichenliste

- 10: Mobiles Transportsystem
- 14: Modulrahmen
- 20: Antriebsmodul
- 21: erster Lasthebel
- 22: zweiter Lasthebel
- 25: Lastaufnahmeeinheit
- 31: erste Stützstelle
- 32: zweite Stützstelle
- 41: erste Lenkrolle
- 42: zweite Lenkrolle
- 43: dritte Lenkrolle
- 44: vierte Lenkrolle
- 61: erste Schwenkachse
- 62: zweite Schwenkachse
- 63: dritte Schwenkachse
- 64: vierte Schwenkachse
- 70: Antriebseinheit
- 71: erstes Antriebsrad
- 72: zweites Antriebsrad
- 75: Übertragerkopf
- 90: Lastachse
- 95: Lenkachse

- A1: erster Abstand
- A2: zweiter Abstand
- A3: dritter Abstand
- A4: vierter Abstand
- A5: fünfter Abstand
- A6: sechster Abstand
- A7: siebter Abstand
- X: Längsrichtung
- Y: Querrichtung
- Z: Vertikalrichtung

## Patentansprüche

1. Mobiles Transportsystem (10), zum Transport von Gegenständen, insbesondere in einer technischen Anlage, umfassend
ein erstes Antriebsmodul (20) und ein zweites Antriebsmodul (20), welche in einer Längsrichtung (X) versetzt zueinander angeordnet sind, und
eine Lastaufnahmeeinheit (25), welche auf den Antriebsmodulen (20) abgestützt ist, wobei jedes der Antriebsmodule (20)
einen Modulrahmen (14),
eine erste Lenkrolle (41), welche um eine erste Drehachse drehbar gelagert ist,
eine zweite Lenkrolle (42), welche um eine zweite Drehachse drehbar gelagert ist,
eine dritte Lenkrolle (43), welche um eine dritte Drehachse drehbar gelagert ist,
eine vierte Lenkrolle (44), welche um eine vierte Drehachse drehbar gelagert ist, und
eine Antriebseinheit (70) umfasst, wobei
die Antriebseinheit (70) einen an dem Modulrahmen (14) angeordneten Antriebsrahmen,
ein um eine erste Antriebsachse drehbares erstes Antriebsrad (71) und
ein um eine zweite Antriebsachse drehbares zweites Antriebsrad (72) aufweist, **dadurch gekennzeichnet, dass**
die erste Lenkrolle (41) an einem ersten Lasthebel (21) angeordnet ist, welcher um eine in eine Querrichtung (Y) verlaufende Lastachse (90) relativ zu dem Modulrahmen (14) schwenkbar ist, die zweite Lenkrolle (42) an einem zweiten Lasthebel (22) angeordnet ist, welcher um die Lastachse (90) relativ zu dem Modulrahmen (14) schwenkbar ist,
die dritte Lenkrolle (43) an dem Modulrahmen (14) angeordnet ist,
die vierte Lenkrolle (44) an dem Modulrahmen (14) angeordnet ist, und wobei
die Lastaufnahmeeinheit (25) an einer ersten Stützstelle (31) auf dem ersten Lasthebel (21) und an einer zweiten Stützstelle (32) auf dem zweiten Lasthebel (22) abgestützt ist.

2. Mobiles Transportsystem (10) nach Anspruch 1, **dadurch gekennzeichnet, dass**
der Antriebsrahmen um eine in eine Vertikalrichtung (Z) verlaufende Lenkachse (95) relativ zu dem Modulrahmen (14) schwenkbar ist, und/oder dass
die erste Lenkrolle (41) um eine in Vertikalrichtung (Z) verlaufende erste Schwenkachse (61) relativ zu dem ersten Lasthebel (21) schwenkbar ist, und/oder dass
die zweite Lenkrolle (42) um eine in Vertikalrichtung (Z) verlaufende zweite Schwenkachse (62) relativ zu dem zweiten Lasthebel (22) schwenkbar ist, und/oder dass
die dritte Lenkrolle (43) um eine in Vertikalrichtung (Z) verlaufende dritte Schwenkachse (63) relativ zu dem Modulrahmen (14) schwenkbar ist, und/oder dass
die vierte Lenkrolle (44) um eine in Vertikalrichtung (Z) verlaufende vierte Schwenkachse (64) relativ zu dem Modulrahmen (14) schwenkbar ist.

3. Mobiles Transportsystem (10) nach Anspruch 2, **dadurch gekennzeichnet, dass**
die Lastachse (90) in Längsrichtung (X) zwischen der ersten Schwenkachse (61) und der dritten Schwenkachse (63) angeordnet ist, und /oder dass
die Lastachse (90) in Längsrichtung (X) zwischen der zweiten Schwenkachse (62) und der vierten Schwenkachse (64) angeordnet ist.

4. Mobiles Transportsystem (10) nach einem der Ansprüche 2 bis 3,
**dadurch gekennzeichnet, dass**
die erste Stützstelle (31) in Längsrichtung (X) zwischen der ersten Schwenkachse (61) und der Lastachse (90) angeordnet ist, und /oder dass
die zweite Stützstelle (32) in Längsrichtung (X) zwischen der zweiten Schwenkachse (62) und der Lastachse (90) angeordnet ist.

5. Mobiles Transportsystem (10) nach einem der Ansprüche 2 bis 4,
**dadurch gekennzeichnet, dass**
ein erster Abstand (A1) der Lastachse (90) zu der ersten Stützstelle (31) in Längsrichtung (X) zumindest annähernd gleich einem dritten Abstand (A3) der Lastachse (90) zu der dritten Schwenkachse (63) in Längsrichtung (X) ist und/oder dass
ein zweiter Abstand (A2) der Lastachse (90) zu der zweiten Stützstelle (32) in Längsrichtung (X) zumindest annähernd gleich einem vierten Abstand (A4) der Lastachse (90) zu der vierten Schwenkachse (64) in Längsrichtung (X) ist.

6. Mobiles Transportsystem (10) nach einem der Ansprüche 2 bis 5,
**dadurch gekennzeichnet, dass**
ein fünfter Abstand (A5) der ersten Stützstelle (31) zu der ersten Schwenkachse (61) in Längsrichtung (X) zumindest annähernd doppelt so groß ist wie ein erster Abstand (A1) der ersten Stützstelle (31) zu der Lastachse (90) in Längsrichtung (X), und/oder dass
ein sechster Abstand (A6) der zweiten Stützstelle (32) zu der zweiten Schwenkachse (62) in Längsrichtung (X) zumindest annähernd doppelt so groß ist wie ein zweiter Abstand (A2) der zweiten Stützstelle (32) zu der Lastachse (90) in Längsrichtung (X).

7. Mobiles Transportsystem (10) nach einem der Ansprüche 2 bis 6,
**dadurch gekennzeichnet, dass**
die Lenkachse (95) in Längsrichtung (X) zwischen der ersten Schwenkachse (61) und der Lastachse (90) angeordnet ist, und /oder dass
die Lenkachse (95) in Längsrichtung (X) zwischen der zweiten Schwenkachse (62) und der Lastachse (90) angeordnet ist.

8. Mobiles Transportsystem (10) nach einem der Ansprüche 2 bis 7,
**dadurch gekennzeichnet, dass**
ein siebter Abstand (A7) der Lastachse (90) zu der Lenkachse (95) in Längsrichtung (X) zumindest annähernd gleich einem ersten Abstand (A1) der Lastachse (90) zu der ersten Stützstelle (31) in Längsrichtung (X) ist und/oder dass
ein siebter Abstand (A7) der Lastachse (90) zu der Lenkachse (95) in Längsrichtung (X) zumindest annähernd gleich einem zweiten Abstand (A2) der Lastachse (90) zu der zweiten Stützstelle (32) in Längsrichtung (X) ist.

9. Mobiles Transportsystem (10) nach einem der Ansprüche 2 bis 8,
**dadurch gekennzeichnet, dass**
ein siebter Abstand (A7) der Lastachse (90) zu der Lenkachse (95) in Längsrichtung (X) zumindest annähernd gleich einem dritten Abstand (A3) der Lastachse (90) zu der dritten Schwenkachse (63) in Längsrichtung (X) ist und/oder dass
ein siebter Abstand (A7) der Lastachse (90) zu der Lenkachse (95) in Längsrichtung (X) zumindest annähernd gleich einem vierten Abstand (A4) der Lastachse (90) zu der vierten Schwenkachse (64) in Längsrichtung (X) ist.

10. Mobiles Transportsystem (10) nach einem der Ansprüche 2 bis 9,
**dadurch gekennzeichnet, dass**
die Lenkachse (95) in Querrichtung (Y) zwischen der ersten Schwenkachse (61) und der zweiten Schwenkachse (62) angeordnet ist, und /oder dass
die Lenkachse (95) in Querrichtung (Y) zwischen der dritten Schwenkachse (63) und der vierten Schwenkachse (64) angeordnet ist, und /oder dass
die Lenkachse (95) in Querrichtung (Y) zwischen der ersten Stützstelle (31) und der zweiten Stützstelle (32) angeordnet ist.

11. Mobiles Transportsystem (10) nach einem der vorangegangenen Ansprüche,
**dadurch gekennzeichnet, dass**
die Drehachsen sowie die Antriebsachsen jeweils in eine horizontale Richtung verlaufen.

12. Mobiles Transportsystem (10) nach einem der vorangegangenen Ansprüche,
**dadurch gekennzeichnet, dass**
an mindestens einer der Lenkrollen (41, 42, 43, 44) eine Bremseinrichtung angeordnet ist, mittels welcher eine Drehung der jeweiligen Lenkrolle (41, 42, 43, 44) um die jeweilige Drehachse bremsbar ist.

13. Mobiles Transportsystem (10) nach einem der vorangegangenen Ansprüche,
**dadurch gekennzeichnet, dass**
das erste Antriebsrad (71) an einer um eine erste Schwingachse relativ zu dem Antriebsrahmen schwenkbaren ersten Schwinge drehbar gelagert ist, und
das zweite Antriebsrad (72) an einer um eine zweite Schwingachse relativ zu dem Antriebsrahmen schwenkbaren zweiten Schwinge drehbar gelagert ist, und dass die erste Schwinge und die zweite Schwinge über eine Koppeleinheit derart miteinander gekoppelt sind, dass
eine Schwenkbewegung der ersten Schwinge um die erste Schwingachse in eine erste Schwenkrichtung eine Schwenkbewegung der zweiten Schwinge um die zweite Schwingachse in eine der ersten Schwenkrichtung entgegen gerichtete zweite Schwenkrichtung bewirkt.

14. Mobiles Transportsystem (10) nach einem der vorangegangenen Ansprüche,
**dadurch gekennzeichnet, dass**
die Antriebseinheit (70) einen ersten Antriebsmotor zum Antrieb des ersten Antriebsrads (71) und einen zweiten Antriebsmotor zum Antrieb des zweiten Antriebsrads (72) aufweist.

## Claims

1. A mobile transport system (10) for transporting objects, in particular in a technical facility, comprising a first drive module (20) and a second drive module (20), arranged offset from one another in a longitudinal direction (X), and a load receiving unit (25) which is supported on the drive modules (20), wherein each of the drive modules (20) comprises a module frame (14), a first castor (41), which is rotatably mounted about a first rotational axis, a second castor (42), which is rotatably mounted about a second rotational axis, a third castor (43), which is rotatably mounted about a third rotational axis, a fourth castor (44), which is rotatably mounted about a fourth rotational axis, and a drive unit (70), wherein the drive unit (70) has a drive frame arranged on the module frame (14), a first drive wheel (71) rotatable about a first drive axis and a second drive wheel (72) rotatable about a second drive axis, **characterised in that** the first castor (41) is arranged on a first load lever (21), which is pivotable relative to the module frame (14) about a load axis (90) running in a transverse direction (Y), the second castor (42) is arranged on a second load lever (22), which is pivotable relative to the module frame (14) about the load axis (90), the third castor (43) is arranged on the module frame (14), the fourth castor (44) is arranged on the module frame (14), and wherein the load receiving unit (25) is supported on the first load lever (21) at a first supporting point (31) and on the second load lever (22) at a second supporting point (32).

2. A mobile transport system (10) according to claim 1, **characterised in that** the drive frame is pivotable relative to the module frame (14) about a steering axis (95) running in a vertical direction (Z), and/or **in that** the first castor (41) is pivotable relative to the first load lever (21) about a first pivot axis (61) running in a vertical direction (Z), and/or **in that** the second castor (42) is pivotable relative to the second load lever (22) about a second pivot axis (62) running in a vertical direction (Z), and/or **in that** the third castor (43) is pivotable relative to the module frame (14) about a third pivot axis (63) running in a vertical direction (Z), and/or **in that** the fourth castor (44) is pivotable relative to the module frame (14) about a fourth pivot axis (64) running in a vertical direction (Z).

3. A mobile transport system (10) according to claim 2, **characterised in that** the load axis (90) is arranged between the first pivot axis (61) and the third pivot axis (63) in a longitudinal direction (X), and/or **in that** the load axis (90) is arranged between the second pivot axis (62) and the fourth pivot axis (64) in a longitudinal direction (X).

4. A mobile transport system (10) according to one of claims 2 to 3, **characterised in that** the first supporting point (31) is arranged between the first pivot axis (61) and the load axis (90) in a longitudinal direction (X), and/or **in that** the second supporting point (32) is arranged between the second pivot axis (62) and the load axis (90) in a longitudinal direction (X).

5. A mobile transport system (10) according to any one of claims 2 to 4, **characterised in that** a first distance (A1) of the load axis (90) from the first supporting point (31) in a longitudinal direction (X) is at least substantially equal to a third distance (A3) of the load axis (90) from the third pivot axis (63) in a longitudinal direction (X), and/or **in that** a second distance (A2) of the load axis (90) from the second supporting point (32) in a longitudinal direction (X) is at least substantially equal to a fourth distance (A4) of the load axis (90) from the fourth pivot axis (64) in longitudinal direction (X).

6. A mobile transport system (10) according to any one of claims 2 to 5, **characterised in that** a fifth distance (A5) of the first supporting point (31) from the first pivot axis (61) in a longitudinal direction (X) is at least substantially twice as great as a first distance (A1) of the first supporting point (31) from the load axis (90) in a longitudinal direction (X), and/or **in that** a sixth distance (A6) of the second supporting point (32) from the second pivot axis (62) in a longitudinal direction (X) is at least substantially twice as great as a second distance (A2) of the second supporting point (32) from the load axis (90) in a longitudinal direction (X).

7. A mobile transport system (10) according to any one of claims 2 to 6, **characterised in that** the steering axis (95) is arranged between the first pivot axis (61) and the load axis (95) in a longitudinal direction (X), and/or **in that** the steering axis (95) is arranged between the second pivot axis (62) and the load axis (90) in a longitudinal direction (X).

8. A mobile transport system (10) according to any one of claims 2 to 7, **characterised in that** a seventh distance (A7) of the load axis (90) from the steering axis (95) in a longitudinal direction (X) is at least substantially equal to a first distance (A1) of the load axis (90) from the first supporting point (31) in a longitudinal direction (X), and/or **in that** a seventh distance (A7) of the load axis (90) from the steering axis (95) in a longitudinal direction (X) is at least substantially equal to a second distance (A2) of the load axis (90) from the second supporting point (32) in a longitudinal direction (X).

9. A mobile transport system (10) according to any one of claims 2 to 8, **characterised in that** a seventh distance (A7) of the load axis (90) from the steering axis (95) in a longitudinal direction (X) is at least substantially equal to a third distance (A3) of the load axis (90) from the third pivot axis (63) in a longitudinal direction (X), and/or **in that** a seventh distance (A7) of the load axis (90) from the steering axis (95) in a longitudinal direction (X) is at least substantially equal to a fourth distance (A4) of the load axis (90) from the fourth pivot axis (64) in a longitudinal direction (X).

10. A mobile transport system (10) according to any one of claims 2 to 9, **characterised in that** the steering axis (95) is arranged between the first pivot axis (61) and the second pivot axis (62) in a transverse direction (Y), and/or **in that** the steering axis (95) is arranged between the third pivot axis (63) and the fourth pivot axis (64) in a transverse direction (Y), and/or **in that** the steering axis (95) is arranged between the first supporting point (31) and the second supporting point (32) in a transverse direction (Y).

11. A mobile transport system (10) according to any one of the preceding claims, **characterised in that** the rotational axes and the drive axes each run in a horizontal direction.

12. A mobile transport system (10) according to any one of the preceding claims, **characterised in that** a braking device is arranged at at least one of the castors (41, 42, 43, 44), by means of which braking device there can be braked a rotation of the respective castor (41, 42, 43, 44) about the respective rotational axis.

13. A mobile transport system (10) according to any one of the preceding claims, **characterised in that** the first drive wheel (71) is rotatably mounted on a first swing arm which is pivotable relative to the drive frame about a first swing axis, and the second drive wheel (72) is rotatably mounted on a second swing arm which is pivotable relative to the drive frame about a second swing axis, and **in that** the first swing arm and the second swing arm are coupled to one another via a coupling unit in such a manner that a pivoting motion of the first swing arm about the first swing axis in a first pivot direction brings about a pivoting motion of the second swing arm about the second swing axis in a second pivot direction directed counter to the first pivot direction.

14. A mobile transport system (10) according to any one of the preceding claims, **characterised in that** the drive unit (70) has a first drive motor to drive the first drive wheel (71) and a second drive motor to drive the second drive wheel (72).

## Revendications

1. Système de transport mobile (10), pour le transport d'objets, en particulier dans une installation technique, comprenant un premier module d'entraînement (20) et un deuxième module d'entraînement (20), lesquels sont disposés l'un par rapport à l'autre de manière décalée dans une direction longitudinale (X), et une unité de prise de charge (25), laquelle est supportée sur les modules d'entraînement (20), chaque module d'entraînement (20) comportant un cadre de module (14), un premier galet directeur (41), lequel est monté rotatif autour d'un premier axe de rotation, un deuxième galet directeur (42), lequel est monté rotatif autour d'un deuxième axe de rotation, un troisième galet directeur (43), lequel est monté rotatif autour d'un troisième axe de rotation, un quatrième galet directeur (44), lequel est monté rotatif autour d'un quatrième axe de rotation, et une unité d'entraînement (70), l' unité d'entraînement (70) comportant un cadre d'entraînement disposé sur le cadre de module (14), une première roue d'entraînement (71) rotative autour d'un premier axe d'entraînement et une deuxième roue d'entraînement (72) rotative autour d'un deuxième axe d'entraînement, **caractérisé en ce que** le premier galet directeur (41) est disposé sur un premier levier de charge (21), lequel est pivotant autour d'un axe de charge (90) s'étendant dans une direction transversale (Y) relativement au cadre de module (14), le deuxième galet directeur (42) est disposé sur un deuxième levier de charge (22), lequel est pivotant autour de l'axe de charge (90) relativement au cadre de module (14), le troisième galet directeur (43) est disposé sur le cadre de module (14), le quatrième galet directeur (44) est disposé sur le cadre de module (14), et l'unité de prise de charge (25) est supportée sur un premier point d'appui (31) sur le premier levier de charge (21) et sur un deuxième point d'appui (32) sur le deuxième levier de charge (22).

2. Système de transport mobile (10) selon la revendication 1, **caractérisé en ce que** le cadre d'entraînement est pivotant autour d'un axe de braquage (95) s'étendant dans une direction verticale (Z) relativement au cadre de module (14), et/ou **en ce que** le premier galet directeur (41) est pivotant autour d'un premier axe de pivotement (61) s'étendant dans la direction verticale (Z) relativement au premier levier de charge (21), et/ou **en ce que** le deuxième galet directeur (42) est pivotant autour d'un deuxième axe de pivotement (62) s'étendant dans la direction verticale (Z) relativement au deuxième levier de charge (22), et/ou **en ce que** le troisième galet directeur (43) est pivotant autour d'un troisième axe de pivotement (63) s'étendant dans la direction verticale (Z) relativement au cadre de module (14), et/ou **en ce que** le quatrième galet directeur (44) est pivotant autour d'un quatrième axe de pivotement (64) s'étendant dans la direction verticale (Z) relativement au cadre de module (14).

3. Système de transport mobile (10) selon la revendication 2, **caractérisé en ce que** l'axe de charge (90) est disposé en direction longitudinale (X) entre le premier axe de pivotement (61) et le troisième axe de pivotement (63), et/ou **en ce que** l'axe de charge (90) est disposé en direction longitudinale (X) entre le deuxième axe de pivotement (62) et le quatrième axe de pivotement (64).

4. Système de transport mobile (10) selon l'une des revendications 2 à 3, **caractérisé en ce que** le premier point d'appui (31) est disposé en direction longitudinale (X) entre le premier axe de pivotement (61) et l'axe de charge (90), et/ou **en ce que** le deuxième point d'appui (32) est disposé en direction longitudinale (X) entre le deuxième axe de pivotement (62) et l'axe de charge (90).

5. Système de transport mobile (10) selon l'une des revendications 2 à 4, **caractérisé en ce qu'** une première distance (A1) de l'axe de charge (90) au premier point d'appui (31) en direction longitudinale (X) est au moins sensiblement égale à une troisième distance (A3) de l'axe de charge (90) au troisième axe de pivotement (63) en direction longitudinale (X) et/ou **en ce qu'** une deuxième distance (A2) de l'axe de charge (90) au deuxième point d'appui (32) en direction longitudinale (X) est au moins sensiblement égale à une quatrième distance (A4) de l'axe de charge (90) au quatrième axe de pivotement (64) en direction longitudinale (X).

6. Système de transport mobile (10) selon l'une des revendications 2 à 5, **caractérisé en ce qu'** une cinquième distance (A5) du premier point d'appui (31) au premier axe de pivotement (61) en direction longitudinale (X) est au moins sensiblement deux fois plus grande qu'une première distance (A1) du premier point d'appui (31) à l'axe de charge (90) en direction longitudinale (X), et/ou **en ce qu'** une sixième distance (A6) du deuxième point d'appui (32) au deuxième axe de pivotement (62) en direction longitudinale (X) est au moins sensiblement deux fois plus grande qu'une deuxième distance (A2) du deuxième point d'appui (32) à l'axe de charge (90) en direction longitudinale (X).

7. Système de transport mobile (10) selon l'une des revendications 2 à 6, **caractérisé en ce que** l'axe de braquage (95) est disposé en direction longitudinale (X) entre le premier axe de pivotement (61) et l'axe de charge (90), et/ou **en ce que** l'axe de braquage (95) est disposé en direction longitudinale (X) entre le deuxième axe de pivotement (62) et l'axe de charge (90).

8. Système de transport mobile (10) selon l'une des revendications 2 à 7, **caractérisé en ce qu'** une septième distance (A7) de l'axe de charge (90) à l'axe de braquage (95) en direction longitudinale (X) est au moins sensiblement égale à une première distance (A1) de l'axe de charge (90) au premier point d'appui (31) en direction longitudinale (X) et/ou **en ce qu'** une septième distance (A7) de l'axe de charge (90) à l'axe de braquage (95) en direction longitudinale (X) est au moins sensiblement égale à une deuxième distance (A2) de l'axe de charge (90) au deuxième point d'appui (32) en direction longitudinale (X).

9. Système de transport mobile (10) selon l'une des revendications 2 à 8, **caractérisé en ce qu'** une septième distance (A7) de l'axe de charge (90) à l'axe de braquage (95) en direction longitudinale (X) est au moins sensiblement égale à une troisième distance (A3) de l'axe de charge (90) au troisième axe de pivotement (63) en direction longitudinale (X) et/ou **en ce qu'** une septième distance (A7) de l'axe de charge (90) à l'axe de braquage (95) en direction longitudinale (X) est au moins sensiblement égale à une quatrième distance (A4) de l'axe de charge (90) au quatrième axe de pivotement (64) en direction longitudinale (X).

10. Système de transport mobile (10) selon l'une des revendications 2 à 9, **caractérisé en ce que** l'axe de braquage (95) est disposé en direction transversale (Y) entre le premier axe de pivotement (61) et le deuxième axe de pivotement (62), et/ou **en ce que** l'axe de braquage (95) est disposé en direction transversale (Y) entre le troisième axe de pivotement (63) et le quatrième axe de pivotement (64), et/ou **en ce que** l'axe de braquage (95) est disposé en direction transversale (Y) entre le premier point d'appui (31) et le deuxième point d'appui (32).

11. Système de transport mobile (10) selon l'une des revendications précédentes, **caractérisé en ce que** les axes de rotation ainsi que les axes d'entraînement s'étendent chacun dans une direction horizontale.

12. Système de transport mobile (10) selon l'une des revendications précédentes, **caractérisé en ce qu'**un dispositif de freinage est disposé sur au moins un des galets directeurs (41, 42, 43, 44), au moyen duquel une rotation du galet directeur respectif (41, 42, 43, 44) autour de l'axe de rotation respectif peut être freinée.

13. Système de transport mobile (10) selon l'une des revendications précédentes, **caractérisé en ce que** la première roue d'entraînement (71) est montée rotatif sur un premier bras oscillant pivotant autour d'un premier axe d'oscillation relativement au cadre d'entraînement, et la deuxième roue d'entraînement (72) est montée rotatif sur un deuxième bras oscillant pivotant autour d'un deuxième axe d'oscillation relativement au cadre d'entraînement, et **en ce que** le premier bras oscillant et le deuxième bras oscillant sont couplés l'un à l'autre via une unité de couplage de telle sorte qu'un mouvement de pivotement du premier bras oscillant autour du premier axe d'oscillation dans une première direction de pivotement provoque un mouvement de pivotement du deuxième bras oscillant autour du deuxième axe d'oscillation dans une deuxième direction de pivotement orientée à l'opposé de la première direction de pivotement.

14. Système de transport mobile (10) selon l'une des revendications précédentes, **caractérisé en ce que** l'unité d'entraînement (70) comporte un premier moteur d'entraînement pour l'entraînement de la première roue d'entraînement (71) et un deuxième moteur d'entraînement pour l'entraînement de la deuxième roue d'entraînement (72).
